Europäisches Patentamt

European Patent Office

Office européen des brevets

(11) Veröffentlichungsnummer: **0 442 367 A2**

## (12) EUROPÄISCHE PATENTANMELDUNG

(21) Anmeldenummer: 91101628.5

(22) Anmeldetag: 06.02.91

(51) Int. Cl.⁵: **H01B 17/30, H02B 1/28**

(30) Priorität: 14.02.90 DE 4004550

(43) Veröffentlichungstag der Anmeldung:
21.08.91 Patentblatt 91/34

(84) Benannte Vertragsstaaten:
AT DE FR GB IT NL SE

(71) Anmelder: Brandner, Hans
Artenreitring 1a

W-8240 Schönau(DE)

(72) Erfinder: Brandner, Hans
Artenreitring 1a
W-8240 Schönau(DE)

(74) Vertreter: Haft, Berngruber, Czybulka
Postfach 14 02 46 Hans-Sachs-Strasse 5
W-8000 München 5(DE)

(54) Vorrichtung zum Verschliessen einer Kabeldurchführungsöffnung in einem Schaltschrank.

(57) Eine Vorrichtung (3) zum Verschließen einer in einer Wand oder im Boden eines Schaltschranks vorgesehenen Öffnung zur Kabeldurchführung aus einem Schaltschrank weist einen die Öffnung verschließenden geteilten Grundkörper (7) auf, der mit wenigstens einer Bohrung (11, 12) versehen ist, durch die das Kabel (6) hindurchgeht. Ferner ist ein in die Grundkörperbohrung (11, 12) steckbarer Stopfen (17, 18) aus gummielastischem Material vorgesehen, der wenigstens eine Längsbohrung (19 bis 24) zur Kabeldurchführung und einen Längsschlitz (25 bis 30) zwischen seiner Längsbohrung (19 bis 24) und seinem Außenumfang aufweist und der sich an einen Anschlag in der Grundkörperbohrung (11, 12) abstützt. Eine in die Grundkörperbohrung (11, 12) einschraubbare längsgeteilte Schraube (36) mit einer Längsbohrung (40) zur Kabeldurchführung weist einen konusförmigen Abschnitt (46) auf, der sich zu dem in die Grundkörperbohrung (11, 12) gesteckten Stopfen (17, 18) hin erweitert und beim Einschrauben der Schraube (36) in die Grundkörperbohrung (11, 12) an einen Außenumfangsabschnitt (31, 32) des Stopfens (17, 18) preßbar ist.

Fig. 1

Die Erfindung bezieht sich auf eine Vorrichtung zum Verschließen einer in einer Wand oder im Boden eines Schaltschranks vorgesehenen Öffnung zur Kabeldurchführung aus dem Schaltschrank.

Um Kabel, die an die Schaltanlage im Schaltschrank angeschlossen sind, nach außen führen zu können, muß in der Wand oder im Boden des Schaltschranks eine Öffnung vorgesehen werden. Wenn die Wand oder der Boden aus einzelnen Platten besteht, wird heutzutage meist so vorgegangen, daß eine Fuge zwischen den Platten freigelassen wird, durch die die Kabel gesteckt werden. Die Fuge wird beispielsweise durch zwei Gummistreifen, zwischen denen die Kabel angeordnet sind, abgedichtet. Insbesondere wenn Kabel sehr unterschiedlichen Durchmessers abgedichtet werden müssen, läßt jedoch bei dieser Methode die Dichtigkeit zu wünschen übrig.

Aufgabe der Erfindung ist es, eine Vorrichtung der eingangs genannten Art zur Verfügung zu stellen, die eine hohe Dichtigkeit gewährleistet.

Dies wird erfindungsgemäß mit der im Anspruch 1 gekennzeichneten Vorrichtung erreicht. In den Unteransprüchen sind vorteilhafte Ausgestaltungen der Erfindung wiedergegeben.

Unter einem Schaltschrank ist erfindungsgemäß jede in einem Gehäuse angeordnete elektrische Schaltanlage zu verstehen, also beispielsweise auch ein Schaltkasten oder ein Schaltpult. Ferner ist unter einer Bohrung erfindungsgemäß jede zylindrische Öffnung zu verstehen, unabhängig davon, wie sie hergestellt worden ist.

Mit der erfindungsgemäßen Vorrichtung werden Kabel, die aus einem Schaltschrank herausgeführt werden, zuverlässig abgedichtet. Zugleich werden die Kabel gegen Zug gesichert.

Die Öffnung in der Schrankwand oder im - boden, durch die die Kabel herausgeführt werden, wird erfindungsgemäß vorzugsweise dadurch hervorgebracht, daß der Boden oder die Wand aus zwei oder mehreren plattenförmigen Teilen besteht und zwischen den Platten eine Fuge freigelassen wird, in der der Grundkörper angeordnet wird.

Es kann sich bei der Öffnung jedoch auch um ein Loch handeln, das in dem Boden bzw. der Wand des Schaltschranks angebracht worden ist. In diesem Fall wird der Grundkörper auf das Loch gelegt und z. B. am Schrank auf dem Boden bzw. der Wand befestigt.

Nachstehend ist eine Ausführungsform der erfindungsgemäßen Vorrichtung anhand der Zeichnung näher erläutert. Darin zeigen

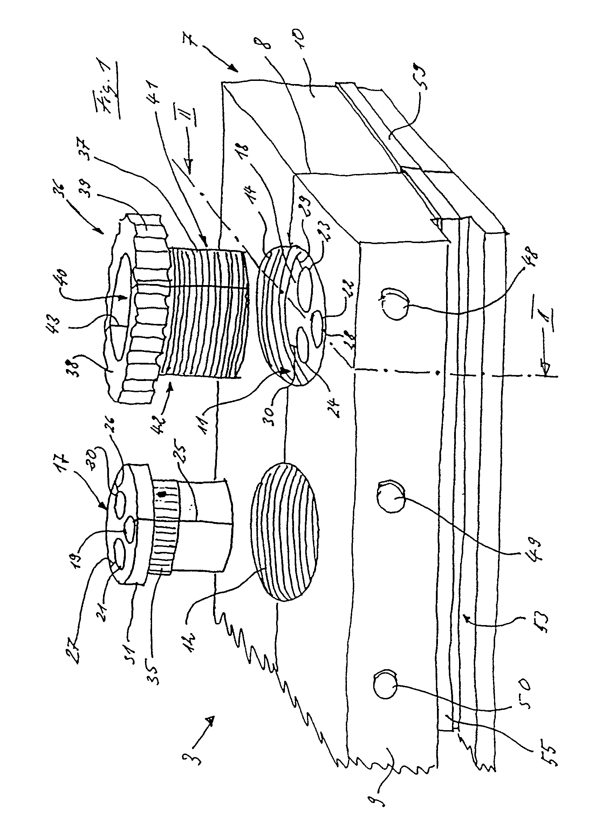

Fig. 1    eine perspektivische Ansicht eines Teils der Vorrichtung mit herausgenommenen Stopfen bzw. herausgenommener Schraube; und

Fig. 2    einen Schnitt entlang der Linie II-II in Fig. 1.

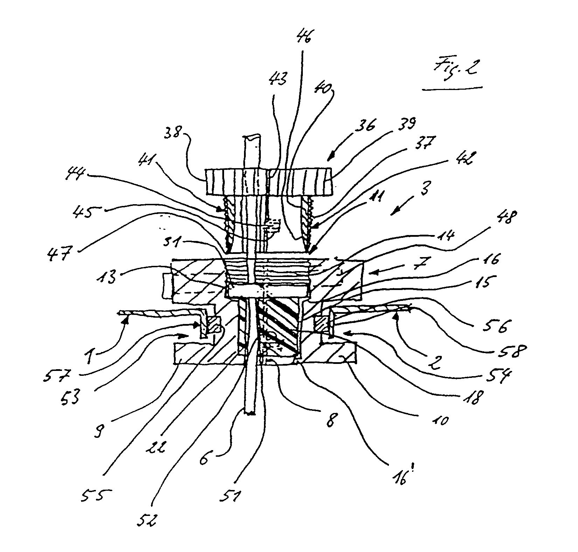

Gemäß Fig. 2 ist zwischen zwei Platten 1 und 2 am Boden eines Schaltschranks eine Fuge vorgesehen, in der eine Vorrichtung 3 angeordnet ist, die die Fuge dicht verschließt.

Die Vorrichtung 3 dient zum Durchführen mehrerer Kabel vom Inneren des Schaltschranks nach außen, wobei in der Zeichnung (Fig. 2) lediglich ein solches Kabel 6 dargestellt ist.

Die Vorrichtung 3 weist einen Grundkörper 7 auf, der im wesentlichen quaderförmig ausgebildet ist und die Fuge zwischen den beiden Platten 1 und 2 verschließt. Der Grundkörper 7 ist längs geteilt, d. h. er weist eine sich von einer Grundfläche zur anderen Grundfläche und über seine gesamte Länge erstreckende, also senkrecht zur Ebene der Platten 1 und 2 stehende Teilungsfuge 8 auf, die den Grundkörper 7 in die beiden Teile 9 und 10 teilt.

Im Grundkörper 7 sind mehrere sich von einer Grundfläche zur anderen erstreckende Bohrungen 11, 12 vorgesehen, durch die in der Mitte die Teilungsfuge 8 hindurchgeht. D. h., die Längsmittelachse der Bohrungen 11 und 12 und die Teilungsfuge 8 liegen in einer Ebene. Nachstehend wird der Einfachheit halber nur eine Bohrung 11 näher erläutert.

Die Bohrung 11 besitzt einen erweiterten, also einen großen Innendurchmesser aufweisenden Abschnitt 13 mit einem Innengewinde 14 und einen einen geringeren Durchmesser aufweisenden, verjüngten Abschnitt 15, wobei zwischen den beiden Abschnitten 13 und 15 eine sich leicht zum Abschnitt 15 hin konisch verjüngende Ringschulter 16 gebildet ist. Eine weitere Verjüngung 16' der Bohrung 11 ist am unteren, also vom Gewindeabschnitt 13 abgewandten Ende des verjüngten Abschnitts 15 vorgesehen. In die Grundkörperbohrungen 11 und 12 sind Stopfen 17, 18 gesteckt. Die Stopfen 17, 18 bestehen aus einem gummielastischen Material, also neben Gummi beispielsweise aus einem Kautschuk, einem Kunststoff oder dgl.

Jeder Stopfen 17, 18 weist in Umfangsrichtung gleichmäßig verteilte, also bei drei Stopfen um 120° versetzte Längsbohrungen 19, 20, 21 bzw. 22, 23, 24 auf, durch die jeweils ein Kabel 6 hindurchgeführt werden kann. Um das Kabel 6 in die Längsbohrungen 19 bis 24 hineinzubringen, ist ein sich von einem zum anderen Ende jeder Bohrung 19 bis 24 erstreckender Längsschlitz 25, 26, 27 bzw. 28, 29, 30 vorgesehen, durch den das Kabel 6 von außen in die Bohrung 19 bis 24 gesteckt werden kann. Jeder Stopfen 17, 18 weist an seinem oberen Ende, das bei Anordnung des Stopfens 18 in der Bohrung 11 dem Gewindeabschnitt 13 benachbart ist, einen erweiterten, d. h. einen einen großen Außendurchmesser aufweisenden Umfangsabschnitt 31, 32 auf, der sich mit seiner unteren Kante gemäß Fig. 2 auf der Ringschulter 16 in der Grundkörperbohrung 11 abstützt. Ansonsten ist der Außendurchmesser der Umfangsabschnitte 31, 32 so bemessen, das ein schmaler Spalt zwischen den Umfangsabschnitt 31, 32 und dem erweiterten Gewindeabschnitt 13 gebildet wird.

Der untere verjüngte Abschnitt 33, 34 paßt möglichst genau in den verjüngten Abschnitt 15 der Grundkörperbohrung 11 hinein und ist mit einer Rändelung 35 versehen.

In das Innengewinde 14 des erweiterten Abschnitts 13 der Grundkörperbohrung wird eine Schraube 36 mit einem Außengewinde 37 geschraubt. Der Kopf 38 der Schraube 36 ist mit einer Rändelung 39 zur Erleichterung des Einschraubens per Hand versehen.

Die Schraube 36 ist mit einer Längsbohrung 40 versehen, die einen so großen Durchmesser aufweist, daß der Abschnitt mit dem Außengewinde 37 praktisch einen Rohrstutzen bildet. Die Schraube 36 ist ihrer Länge nach in zwei Hälften 41, 42 geteilt. In der Teilungsfuge 43, an der die beiden Hälfen 41, 42 aneinanderliegen, ist als Formschluß jeweils ein Paßstift 44 an der einen Hälfte 41 und eine Bohrung 45, in die der Paßstift 44 steckbar ist, an der anderen Hälfte 42 vorgesehen, so daß die beiden Hälften 41, 42 der Schraube 36 gegenüber einander nicht verschiebbar sind, also der Gewindegang des Außengewindes 37 der Schraube 36 intakt bleibt.

Mit ihrem dem Stopfen 17 zugewandten Ende weist die Längsbohrung 40 in der Schraube 36 einen konusförmigen Abschnitt 46 auf. D. h., der Innendurchmesser der Bohrung 40 vergrößert sich zu diesem Ende hin unter Bildung einer schmalen Umfangskante 47. Die schmale Umfangskante 47 dringt in den Spalt zwischen dem erweiterten Umfangsabschnitt 31 des Stopfens 18 und dem weiterten Gehäuseabschnitt 13 der Grundkörperbohrung 11 ein, wenn die Schraube 36 in den erweiterten Gewindeabschnitt 13 der Grundkörperbohrung 11 geschraubt wird. Durch den sich verjüngenden Durchmesser des konusförmigen Abschnitts 46 von dem dem Stopfen 18 benachbarten Ende der Längsbohrung 40 weg wird der Umfangsabschnitt 31 des Stopfens 18 beim weiteren Hineinschrauben der Schraube 36 zusammengedrückt und damit das Kabel in der Bohrung 22 im Stopfen 18 sicher abgedichtet.

Die beiden Hälften 9, 10 des Grundkörpers 7 werden durch Schrauben 48 bis 50 fest gegeneinander gepreßt. Damit sich die Hälfte 9, 10 des Grundkörpers 7 nicht gegeneinander verschieben können, also der Gewindegang des Innengewindes 14 der Grundkörperbohrungen 11, 12 intakt gehalten wird, sind in der Teilungsgfuge 8 an einer Hälfte 9 des Grundkörpers 7 Paßstifte 51 und an der anderen Hälfte 10 Bohrungen 52 vorgesehen, in die die Paßstifte 51 eingreifen. Dadurch werden die Hälften 9 und 10 durch Formschluß sicher gegen Verschieben gesichert.

An seinen beiden Längsseiten weist der Grundkörper (7) Längsnuten 53, 54 auf, wobei in jeder Längsnut 53, 54 eine Dichtung 55, 56 vorgesehen ist.

In die Längsnuten 53, 54 greifen die Platten 1, 2 mit ihren Abkantungen 57, 58 ein, so daß die Abkantungen 57, 58 dichtend an den Dichtungen 55, 56 anliegen.

Der Grundkörper 7 kann solange wie die Fuge zwischen den beiden Platten 1, 2 ausgebildet sein. Wenn wenige Bohrungen 11, 12 zur Durchführung der Kabel 6 ausreichen, kann jedoch der Grundkörper 7 nur ein Segment bilden, wobei ein oder mehrere weitere Segmente vorgesehen sind, um die Fuge zwischen den Platten 1, 2 zu schließen. Das bzw. die weiteren Segmente entsprechen dabei dem Grundkörpersegment 7, sind jedoch nicht zweigeteilt und weisen keine Bohrungen 11, 12 auf. In diesem Fall besteht der Grundkörper also aus mehreren quer zur Teilungsfuge 8 geteilten Segmenten, wobei wenigstens eines der Segmente mit Bohrungen 11, 12 versehen ist. Die aneinanderstoßenden Segmente werden durch eine Dichtung 59 an der Stirnseite abgedichtet.

Es können jedoch statt weiterer Segmente auch Platten vorgesehen sein, um die Fuge außerhalb des Grundkörpers 7 abzudichten.

Die nicht benötigten Bohrungen 11, 12 in dem Grundkörper 7 können durch Blindschrauben entsprechend der Schraube 36 abgedichtet werden, die jedoch massiver, also ohne Bohrung 40 und ohne Teilungsfuge 43 ausgebildet sind. Desgleichen können die nicht benötigten Bohrungen 19 bis 24 in den Stopfen 17, 18 durch Blindstopfen verschlossen werden.

Wenn die Kabel, die an die Schaltanlage in dem Schaltschrank angeschlossen sind, aus dem Schaltschrank heraus, d. h. durch dessen Wand oder dessen Boden geführt werden sollen, werden zwei Platten 1, 2 der Wand bzw. des Bodens so angeordnet, daß sich eine Fuge bildet.

Dann werden die beiden Hälften 9, 10 des Grundkörpers 7 mittels der Paßstifte 51 und Bohrungen 52 zusammengesteckt, so daß die Bohrungen 11, 12 die Kabel 6 umschließen. Darauf werden die Schrauben 48 bis 50 eingeschraubt und angezogen.

Der Grundkörper kann nun in die Fuge zwischen den Platten 1, 2 geschoben werden. Anschließend werden die Kabel 6 in die Bohrungen 19 bis 24 der Stopfen 17, 18 durch deren Längsschlitze 25 bis 30 gesteckt. Dabei stehen mehrere Stopfen 17, 18 bereit, die sich in der Anzahl der Bohrungen 19 bis 24 und dem Durchmesser der Bohrungen voneinander unterscheiden. D. h., neben den dargestellten Stopfen 17, 18 mit jeweils drei Bohrungen 19 bis 21 bzw. 22 bis 24 stehen z. B. Stopfen mit nur einer einzigen großen Bohrung für ein dickes Kabel sowie Stopfen mit jeweils vier einen kleineren Innendurchmesser aufweisenden Bohrungen für ein dünneres Kabel zur Auswahl.

Alsdann werden die beiden Hälften 41, 42 der Schraube 46 mittels der Paßstifte 44 und der Bohrungen 45 so zusammengesteckt, daß sie das bzw. die Kabel 6 umschließen, die durch die Bohrung bzw. die Bohrungen 19 bis 24 der Stopfen 17, 18 hindurchgehen, die in die Bohrungen 11, 12 des Grundkörpers 7 gesteckt worden sind, in den die Schrauben 36 geschraubt werden. Nach Einschrauben der Schraube 36 in die betreffende Bohrung 11, 12 des Grundkörpers 7 sind die Kabel 6 abgedichtet.

**Patentansprüche**

1. Vorrichtung zum Verschließen einer in einer Wand oder im Boden eines Schaltschranks vorgesehenen Öffnung zur Kabelduchführung aus einem Schaltschrank, gekennzeichnet durch einen die Öffnung verschließenden Grundkörper (7), der wenigstens eine Bohrung (11, 12) zur Kabeldurchführung und eine durch die Bohrung (11, 12) hindurchgehende Teilungsfuge (8) aufweist, einen in die Grundkörperbohrung (11, 12) steckbaren Stopfen (17, 18) aus gummielastischem Material, der wenigstens eine Längsbohrung (19 bis 24) zur Kabeldurchführung und einen Längsschlitz (25 bis 30) zwischen seiner Längsbohrung (19 bis 24) und seinem Außenumfang aufweist und der sich an einen Anschlag in der Grundkörperbohrung (11, 12) abstützt; und einer in die Grundkörperbohrung (11, 12) einschraubbaren längsgeteilten Schraube (36) mit einer Längsbohrung (40) zur Kabeldurchführung, wobei in der Schraubenlängsbohrung (40) und/oder in der Grundkörperbohrung (11, 12) ein konusförmiger Abschnitt (46) vorgesehen ist, der sich zu dem in die Grundkörperbohrung (11, 12) gesteckten Stopfen (17, 18) hin erweitert und beim Einschrauben der Schraube (36) in die Grundkörperbohrung (11, 12) an einen Außenumfangsabschnitt (31, 32) des Stopfens (17, 18) preßbar ist, und wobei die beiden Teile (9, 10) des Grundkörpers (7) und die beiden Teile (41, 42) der Schraube (36) gegen ein gegenseitiges Verschieben gesichert sind.

2. Vorrichtung nach Anspruch 1, dadurch gekennzeichnet, daß die Öffnung in der Schrankwand oder im -boden durch eine Fuge zwischen zwei Wand- oder Bodenteilen (1, 2) gebildet wird und der Grundkörper an seinen beiden Längsseiten je eine Längsnut (53, 54) aufweist, die in das eine bzw. andere Wand- oder Bodenteil (1, 2) eingreift.

3. Vorrichtung nach Anspruch 2, dadurch gekennzeichnet, daß sich in der Längsnut eine Dichtung (55, 56) zur Anlage an das Wand- oder Bodenteil (1, 2) erstreckt.

4. Vorrichtung nach einem der vorstehenden Ansprüche, dadurch gekennzeichnet, daß die Bohrung (11, 12) in dem Grundkörper (7) einen Gewindeabschnitt (13) und einen gegenüber dem Gewindeabschnitt (13) verjüngten Abschnitt (15) unter Bildung einer Ringschulter (16) aufweist, die den Anschlag zum Abstützen des Stopfens (17, 18) bildet.

5. Vorrichtung nach Anspruch 4, dadurch gekennzeichnet, daß der Stopfen (17, 18) einen auf der Ringschulter (16) aufliegenden erweiterten Umfangsabschnitt (31, 32) aufweist.

6. Vorrichtung nach einem der vorstehenden Ansprüche, dadurch gekennzeichnet, daß ein Formschluß zwischen den beiden Teilen (9, 10) des Grundkörpers (7) sowie den beiden Teilen (41, 42) der Schraube (36) zur gegenseitigen Fixierung der Grundkörperteile (9, 10) bzw. der Schraubenteile (41, 42) vorgesehen ist.

Fig. 1

Fig. 2